# FASCICULE DE BREVET EUROPEEN

(11) **EP 1 875 116 B1**
(45) Date de publication et mention de la délivrance du brevet: **21.12.2011**
(21) Numéro de dépôt: 06743803.6
(22) Date de dépôt: 12.04.2006
(51) Int. Cl.: F16L 21/06

(54) **DISPOSITIF POUR L'ACCOUPLEMENT ETANCHE DE DEUX TUBES LISSES**
VORRICHTUNG ZUR ABGEDICHTETEN VERBINDUNG VON ZWEI GLATTEN ROHREN
DEVICE FOR SEALED COUPLING OF TWO SMOOTH TUBES

(30) Priorité: 13.04.2005 FR 0503690
(43) Date de publication de la demande: 09.01.2008
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles sur Cher (FR); ROINTRU, Tony, F-41210 Marcilly en Gault (FR)
(74) Mandataire: Intès, Didier Gérard André
(86) Numéro de dépôt international: PCT/FR2006/050342
(87) Numéro de publication internationale: WO 2006/109002

(56) Documents cités:
- EP-B- 1 181 477
- WO-A-2004/085901
- US-A- 2 227 551
- US-A1- 2003 107 220

## Description

La présente invention concerne un dispositif pour l'accouplement étanche de deux tubes lisses disposés bout à bout ayant sensiblement le même diamètre, le dispositif comprenant un manchon susceptible d'être disposé autour des extrémités en regard des deux tubes, ce manchon étant pourvu de moyens pour permettre une diminution de son diamètre sous l'action de moyens de serrage, le dispositif comprenant, en outre, une bague d'étanchéité apte à être disposée dans le manchon pour entourer les extrémités en regard des deux tubes, cette bague étant constituée par une bande enroulée sur elle-même et présentant deux extrémités aptes à venir en contact d'engagement, par au moins un ensemble mâle/femelle comprenant une conformation mâle apte à être engagée dans une conformation femelle lorsque, la bague étant située dans le manchon, ce dernier est serré autour des extrémités en regard des tubes, dans lequel au moins l'une des conformations mâle et femelle d'un ensemble mâle/femelle présente des bords de contact formés sur des pattes de contact.

Un dispositif de ce type est connu, par exemple par le brevet EP 1 181 477, au nom de la société demanderesse. Lors du serrage de ce dispositif, disposé autour des tubes à accoupler, la conformation mâle pénètre petit à petit dans la conformation femelle, pour que le contact d'engagement, qui sert à assurer l'étanchéité, s'opère.

Dans EP 1 181 477, la conformation mâle est formée par une languette qui pénètre dans une encoche formant la conformation femelle. Du fait des largeurs respectives des conformations mâle et femelle, le contact d'engagement s'établit alors que l'extrémité libre de la languette reste à distance du fond de l'encoche. Lors du serrage, la languette continue à pénétrer dans l'encoche, en provoquant une déformation des conformations mâle/femelle. Cette déformation provoque elle-même des forces résistantes qui tendent à s'opposer à la pénétration de la languette dans l'encoche.

Ainsi, lors du serrage, l'étanchéité est très bien assurée, mais il existe un risque que les efforts résistants précités ne provoquent des déformations inacceptables, par exemple un pliage de la bague dans certaines régions de celle-ci.

La présente invention vise à améliorer encore cet état de la technique en proposant un dispositif sensiblement exempt des inconvénients précités.

Ce but est atteint grâce au fait que des renfoncements de pliage sont ménagés du côté des pattes de contact opposé aux bords de contact et au fait que les renfoncements de pliage présentent des entailles obliques situées au voisinage des pattes de contact pour permettre auxdites pattes, lors de l'engagement de la conformation mâle dans la conformation femelle sous l'effet du serrage, de se plier dans le sens favorisant la pénétration de la conformation mâle dans la conformation femelle.

Ainsi, selon l'invention, le contact d'engagement qui assure l'étanchéité est réalisé sur les bords de contact des pattes de contact. Celles-ci étant aptes à se plier, les efforts résistants précédemment évoqués sont diminués et l'on s'assure que les déformations provoquées par la pénétration de la conformation mâle dans la conformation femelle affecte préférentiellement des zones prédéterminées de la bague d'étanchéité, à savoir les pattes de contact.

Les renfoncements de pliage forment des dégagements dans lesquels les pattes se déplacent lors de leur pliage sous l'effet de la pénétration de la conformation mâle dans la conformation femelle.

Avantageusement, les pattes de contact sont reliées à l'extrémité de la bande qui les porte par des portions de base entaillées présentant lesdites entailles obliques.

Ces portions de base entaillées diminuent localement les résistances à la flexion des pattes de contact et confèrent donc à ces dernières un sens de pliage préférentiel.

Selon un mode de réalisation avantageux, la conformation mâle de l'ensemble mâle/femelle comprend une languette, tandis que la conformation femelle dudit ensemble comprend une encoche délimitée entre deux pattes de contact, pour la pénétration de ladite languette dans laite encoche et au moins l'une des dimensions transversales constituées par la largeur de la languette et la largeur de l'encoche va en diminuant dans le sens de la pénétration de la languette dans l'encoche.

Avantageusement, la conformation femelle de l'ensemble mâle/femelle comprend une encoche, tandis que la conformation mâle dudit ensemble comprend deux pattes latérales de contact aptes à pénétrer dans ladite encoche et au moins l'une des dimensions transversales constituées par la largeur de l'encoche et par l'écart entre les bords de contact des pattes de contact va en diminuant dans le sens de la pénétration desdites pattes dans l'encoche.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en perspective d'un dispositif conforme à l'invention ;
- la figure 2 est une vue de dessus de ce dispositif ;
- la figure 3 est une vue de dessus de la bague d'étanchéité de ce dispositif, prise selon la flèche III de la figure 1 ;
- la figure 4 est une vue de la même bague, prise selon la flèche IV de la figure 3 ;
- la figure 5 est une vue analogue à la figure 3, pour une bague selon une variante de réalisation ;
- la figure 6 montre une conformation mâle/femelle d'une bague selon une variante ; et
- la figure 7 montre une conformation mâle/femelle selon une autre variante.

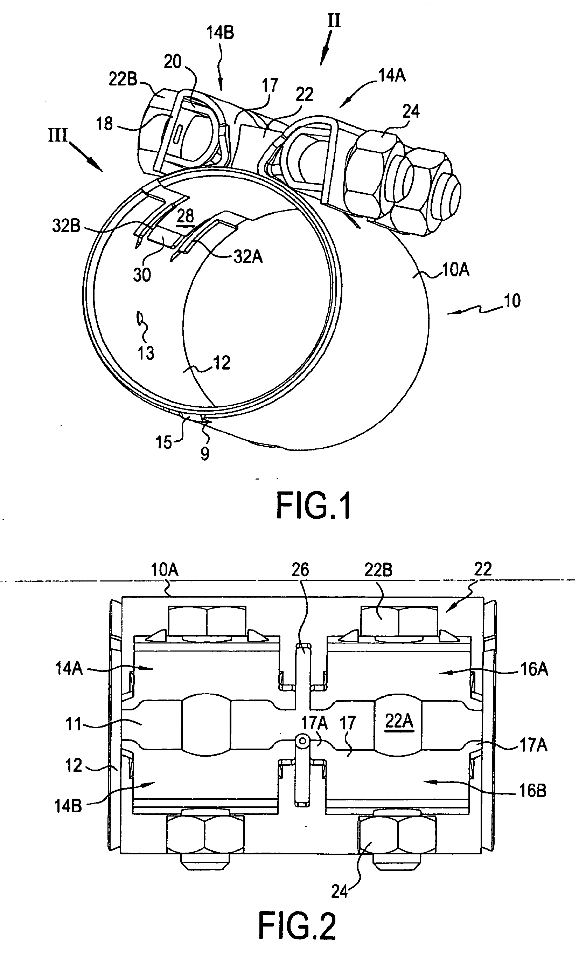

Le dispositif de la figure 1 comprend un manchon 10 à l'intérieur duquel est disposée une bague d'étanchéité 12. Ce dispositif sert à l'accouplement étanche de deux tubes lisses disposés bout à bout ayant sensiblement le même diamètre, les deux extrémités en regard des tubes devant être engagées à l'intérieur de la bague 12 jusqu'à venir en butée avec des bossages de butée 13, de part et d'autre de ces derniers. Par commodité, ces deux tubes ne sont pas représentés sur la figure 1, mais on pourra se reporter à EP 1 181 477 pour le mode de montage.

Le manchon 10 peut être analogue à celui que divulgue EP 1 181 477. Il comporte en effet une partie de ceinture 10A et des moyens de serrage, disposés à ses deux extrémités en regard, entre lesquels une fente 11 qui est longitudinale, c'est-à-dire parallèle à l'axe du manchon, est délimitée. Lors du serrage, la largeur de cette fente est diminuée, réduisant en conséquence le diamètre de la partie de ceinture 10A.

Toutefois, selon le mode de réalisation avantageux représenté sur les figures 1 et 2, le manchon est différent de celui de EP 1 181 477. En effet, pour son serrage, il présente au moins une paire d'oreilles saillantes entre lesquelles est délimitée la fente 11 précitée. En l'espèce, il présente deux paires d'oreilles saillantes, respectivement 14A, 14B et 16A, 16B. Les oreilles de chaque paire sont disposées en regard l'une de l'autre. Chaque oreille comporte une portion de raccordement 17 à la partie de ceinture 10A et une paroi de serrage 18 avec laquelle les moyens de serrage viennent en prise. Cette paroi de serrage 18 est repliée vers la partie de ceinture à partir de la portion de raccordement 17. Un espace est ménagé entre la portion de raccordement et la paroi de serrage. La portion de raccordement est courbe, sa concavité étant tournée vers la paroi de serrage. A sa base, la portion de raccordement présente au moins une avancée 17A dans laquelle sa courbure est localement augmentée. Comme on le voit mieux sur la figure 2, chaque oreille présente deux avancées 17A de ce type, à ses deux extrémités axiales opposées.

Des moyens de renfort équipent les oreilles pour s'opposer à une déformation (un écrasement) de ces dernières sous l'action des moyens de serrage. Dans l'exemple représenté, ces moyens de renfort comprennent, pour chaque oreille, un insert de renfort 20 qui est disposé dans l'espace ménagé entre la portion de raccordement 17 et la paroi de serrage 18. Cet insert de serrage présente la forme d'une gouttière dont le fond est disposé contre la portion de raccordement, tandis que les extrémités libres coopèrent avec la paroi de serrage.

Les moyens de serrage comprennent, pour chaque paire d'oreilles, une vis 22, dont la tige 22A est engagée dans des perçages en regard des deux oreilles de la paire considérée, pour traverser ces dernières, et dont la tête 22B repose contre la paroi de serrage de l'une des oreilles, ainsi qu'un écrou 24, disposé contre la paroi de serrage de l'autre oreille, pour coopérer par vissage avec la tige de la vis. En l'espèce, deux systèmes de serrage identiques sont prévus, comprenant chacun une paire d'oreilles, une vis et un écrou. Pour découpler les efforts de serrage, une fente transversale 26 visible sur la figure 2 est ménagée entre ces deux systèmes dans la partie de ceinture du manchon. Les inserts 20 disposés dans les oreilles 14B et 16B ont leurs fonds percés pour permettre le passage des tiges des vis.

Bien entendu, la conformation particulière du manchon qui vient d'être décrite et les moyens de serrage peuvent être remplacés par tout moyen de type connu. En particulier, le manchon peut être du type décrit dans la demande EP 1 181 477, ou bien être un manchon du type qui vient d'être décrit, mais comprenant une seule paire d'oreilles et un seul ensemble vis/écrou. De même, les moyens de renfort qui viennent d'être décrits peuvent être remplacés par d'autres moyens de renfort ayant un effet équivalent, par exemple par un repli judicieusement formé à partir de la paroi de serrage 18 d'une oreille.

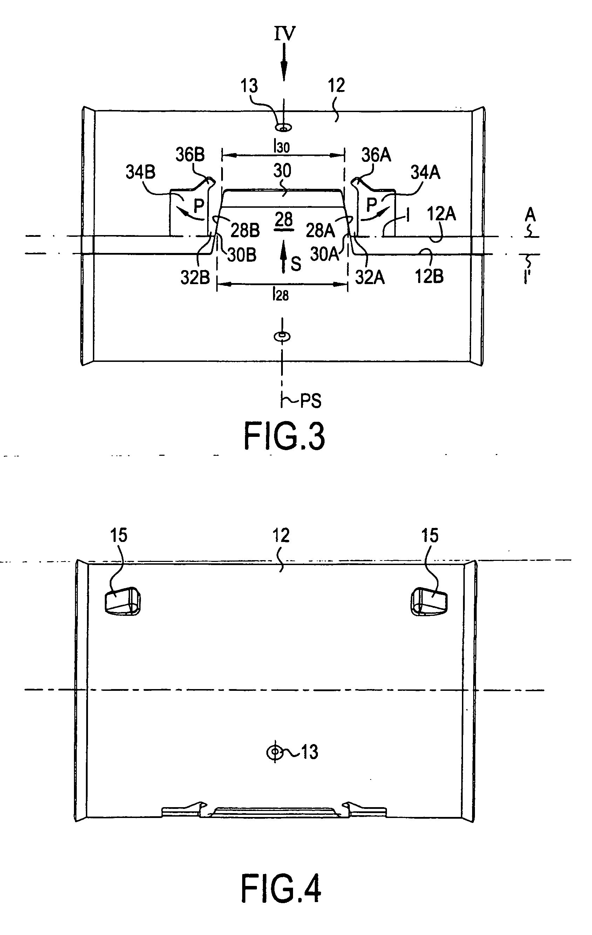

On décrit maintenant la conformation de la bague d'étanchéité selon la présente invention. Cette bague est constituée par une bande enroulée sur elle-même, et dont les deux extrémités sont conformées de telle sorte qu'elles soient aptes à venir en contact d'engagement ensemble. Ainsi, sur les figures 1 et 3, une première extrémité de la bague comporte une conformation mâle formée par une languette 28, tandis que la deuxième extrémité comporte une conformation femelle comprenant une encoche 30 dans laquelle la languette 28 pénètre pour réaliser le contact d'engagement nécessaire à l'étanchéité.

Plus précisément, dans l'exemple des figures 1 et 3, l'encoche 30 de la conformation femelle est délimitée entre deux pattes de contact, respectivement 32A et 32B qui sont aptes à se plier dans le sens favorisant la pénétration de la conformation mâle dans la conformation femelle, au cours du serrage du collier provoquant une telle pénétration. Plus précisément, l'engagement de contact est réalisé entre deux bords latéraux dits intérieurs, respectivement 30A et 30B des pattes de contact 32A et 328 et deux bords latéraux dits extérieurs, respectivement 28A et 28B de la languette 28. On voit sur la figure 3 que la largeur 128 de la languette, mesurée parallèlement à l'axe A de la bague d'étanchéité et du manchon, de même que la largeur 130 de l'encoche 30, mesurée de la même manière, vont en diminuant dans le sens S de la pénétration de la languette dans l'encoche.

Ainsi, comme dans EP 1 181 477, les bords de contact des conformations mâle et femelle peuvent venir en engagement avant le serrage du collier, alors que la bague est dans la situation représentée sur la figure 3. Lors du serrage, la languette 28 est contrainte d'avancer davantage à l'intérieur de l'encoche 30, établissant ainsi entre les bords de contact des longueurs de contact suffisantes pour garantir une bonne étanchéité. Au cours de cette avancée de la languette dans l'encoche, des déformations sont provoquées. Selon l'invention, ces déformations conduisent à plier les pattes 32A et 32B dans le sens favorisant la pénétration de la languette dans l'encoche, c'est-à-dire dans le sens allant en augmentant la largeur de l'encoche comme indiqué par les flèches P.

Sur la figure 3, on voit que des renfoncements de pliage, respectivement 34A et 34B sont ménagés sur les côtés des pattes de contact 32A et 32B opposés aux bords de contact 30A et 30B. Le pliage précité s'opère donc dans ces renfoncements.

Mis à part les renfoncements et l'encoche 30, le bord libre 12A de l'extrémité de la bague 12 à laquelle est formée l'encoche 30 est situé sur une même ligne I, parallèle à l'axe A autour duquel la bande 12 est enroulée. De même, mise à part la languette 28, le bord libre 12B de l'extrémité de la bague à laquelle cette languette est réalisée est également situé sur une même ligne I', parallèle à l'axe A. Pour favoriser l'étanchéité, on fait en sorte que les lignes I et I' soient aussi proches que possible l'une de l'autre lorsque le dispositif est serré sur deux tubes lisses accouplés.

On a déjà évoqué la présence des bossages 13 en saillie sur la périphérie interne de la bague 12 pour former des surfaces de calage pour les extrémités libres des tubes accouplés. Comme on le voit sur la figure 4, cette bague présente en outre des bossages 15, en saillie sur sa périphérie externe. Ces bossages sont disposés dans des indentations 9 de la partie de ceinture 10A du manchon 10, pour réaliser un calage angulaire de la bague 12 par rapport au manchon. Il importe en effet que la conformation mâle/femelle opérant le contact d'étanchéité soit proche des moyens de serrage, tout en étant située sous une partie pleine de la partie de ceinture 10. En effet, si l'espace entre les deux extrémités en regard de la bague 12 se trouvait à l'intersection avec la fente 11 ou la fente 26 précitées, l'étanchéité serait perdue. Par ailleurs, il est souhaitable que les conformations mâles et femelles soient proches des moyens de serrage, pour être affectées directement par le serrage de manière à favoriser la pénétration de la languette dans l'encoche.

Comme on le voit encore sur la figure 3, les pattes de contact sont reliées à l'extrémité de la bande qui les porte par des portions de base entaillées. Plus précisément, les renfoncements de pliage 34A et 34B qui sont ménagés du côté des pattes de contact opposé à l'encoche 30 présentent des entailles obliques 36A et 36B respectivement situées au voisinage des pattes 32A et 32B. Ces entailles sont disposées dans la région du fond des renfoncements adjacente aux pattes 32A et 32B et elles sont orientées de manière à aller en se rapprochant l'une de l'autre dans le sens S de la pénétration de la languette dans l'encoche 30. Ainsi, le pliage des pattes selon les flèches P indiquées sur la figure 3 est favorisé.

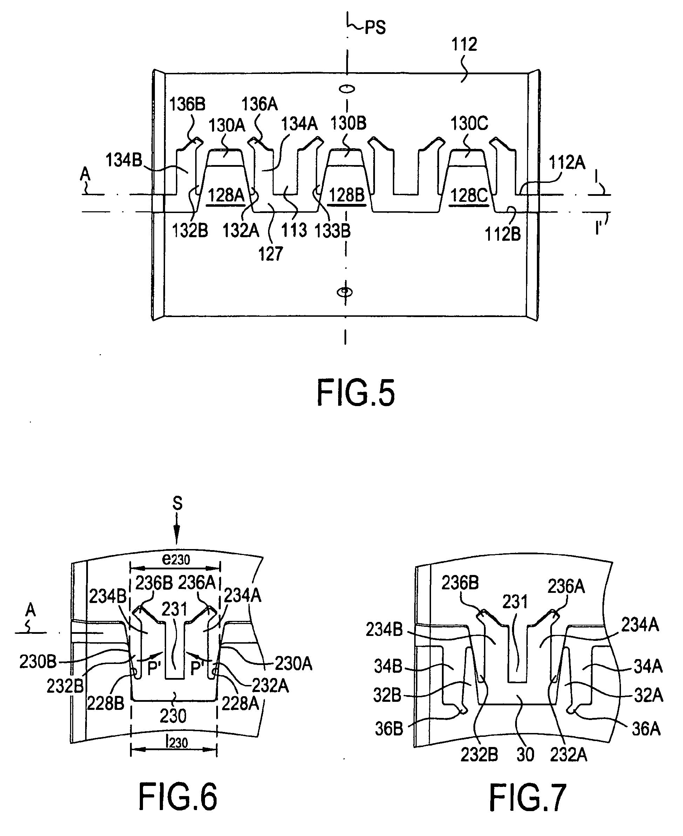

Dans l'exemple des figures 1 et 3, la bague 12 comprend un seul ensemble mâle/femelle comprenant la languette 28 et l'encoche 30 précitées. Sur la figure 5, on voit que, en variante, plusieurs ensembles adjacents peuvent être prévus aux extrémités de la bague 112. On voit en effet trois ensembles mâle/femelle analogues, comprenant respectivement une languette 128A et une encoche 130A, une languette 128B et une encoche 130B, et une languette 128C et une encoche 130C. Chacun de ces ensembles est analogue à celui qui vient d'être décrit en référence à la figure 3, et comprend donc deux pattes de contact, par exemple 132A et 132B, deux renfoncements de pliage, par exemple 134A et 134B, disposés sur les côtés des pattes opposés à l'encoche et deux entailles 136A et 136B analogues aux entailles 36A et 36B précédemment décrites.

Le bord libre 112A de la bague 112 qui est équipé des conformation femelles est situé sur une ligne I parallèle à l'axe d'enroulement du manchon, c'est-à-dire que les extrémités libres des pattes sont situées sur cette ligne, de même que les extrémités libres de toutes les parties ménagées entre les encoches et les renfoncements de pliage.

Des pattes intermédiaires 113, ramenant localement l'extrémité libre 112 A sur la ligne I sont ménagées entre les renfoncements de pliage de deux ensembles adjacents.

De même, le bord libre 112B de la bague sur lequel sont situées les languettes 128A, 128B, et 128C est situé sur une ligne I' parallèle au même axe, par rapport auquel seules les languettes sont saillantes.

Bien entendu, si l'exemple de la figure 5 montre trois ensembles mâle/femelle, un nombre différent d'ensembles pourrait être prévu.

Il est toutefois avantageux que, pour équilibrer les efforts s'exerçant sur la bague lors du serrage, celle-ci présente une symétrie par rapport à son plan médian PS, perpendiculaire à son axe d'enroulement A. Ainsi, sur la figure 2, la languette 28 et l'encoche 30 sont centrées par rapport à un tel plan PS et l'ensemble mâle/femelle central 128B/130B de la figure 5 est également centré sur un tel plan PS.

Sur la figure 5, il est à noter que, entre deux languettes adjacentes, par exemple 128A et 128B, est ménagée une encoche 127 dans laquelle pénètrent deux pattes de contact, par exemple 132A et 133B appartenant aux deux ensembles mâle/femelle adjacents.

Précisément, en référence à la figure 6, on comprend que, selon une variante de l'invention, il est possible de choisir que la conformation femelle comprenne une encoche 230 et que la conformation mâle comprenne deux pattes latérales de contact, respectivement 232A et 232B aptes à pénétrer dans cette encoche. Dans ce cas, l'engagement de contact est opéré entre les bords de contact dits extérieurs, respectivement 230A et 230B des pattes 232A et 232B et, respectivement, des bords de contact dits intérieurs de l'encoche 230, respectivement 228A et 228B. Dans ce cas, la conformation mâle de l'ensemble mâle/femelle considéré comprend donc les deux pattes 232A et 232B précitées. On voit sur la figure 6 que la largeur 1230 de l'encoche mesurée -parallèlement à l'axe d'un roulement A de la bague, et l'écarte 230 entre les bords de contact 230A et 230B des pattes vont en diminuant dans le sens S de la pénétration des pattes dans l'encoche.

La conformation mâle sur la figure 6 comprend en outre une patte centrale 231 qui est disposée entre les pattes de contact 232A et 232B en étant espacée de ces dernières par des renfoncements de pliage, respectivement 234A et 234B. On pourrait s'abstenir de la présence de cette patte centrale 231A et prévoir simplement, que lors de leur pliage, les pattes 232A et 232B se replient dans l'espace ménagé entre elles. Toutefois, comme on l'a vu, il est avantageux que les bords libres des deux extrémités de la bague viennent au plus près l'un de l'autre, de sorte qu'il est souhaitable, grâce à la patte 231, de ramener localement l'extrémité libre de la conformation mâle au niveau de l'extrémité libre des pattes 232A et 232B.

Sur la figure 6, les renfoncements de pliage présentent des entailles obliques, respectivement 236A et 236B qui sont situées au voisinage des pattes de contact 232A et 232B. Ces entailles vont en se rapprochant dans le sens de la pénétration de la conformation mâle dans la conformation femelle, pour favoriser le pliage des pattes selon les flèches P', dans les renfoncements de pliage précités.

La variante de la figure 7 utilise des pattes de contact à la fois pour sa conformation mâle et pour sa conformation femelle.

En effet, la conformation mâle est en l'espèce identique à celle de la figure 6 et ses différents éléments constitutifs sont désignés par les mêmes références que sur cette figure. La conformation femelle est quant à elle identique à celle de la figure 3 et ses différents éléments consécutifs sont identifiés par les mêmes références que sur cette figure. Ainsi, lorsque la conformation mâle pénètre plus avant dans la conformation femelle, les pattes 232A et 232B de la conformation mâle ont tendance à se plier dans les renfoncements 234A et 234B ménagés entre elles, de part et d'autre de la patte centrale 231, tandis que les pattes 32A et 32B qui délimitent entre elles l'encoche 30 de la conformation femelle ont tendance à se plier dans les renfoncements de pliage 34A et 34B ménagés de part et d'autre de ces pattes. Les entailles obliques 36A, 36B, 236A et 236B favorisent ces pliages.

## Revendications

1. Dispositif pour l'accouplement étanche de deux tubes lisses disposés bout à bout ayant sensiblement le même diamètre, le dispositif comprenant un manchon (10) susceptible d'être disposé autour des extrémités en regard des deux tubes, ce manchon étant pourvu de moyens (11) pour permettre une diminution de son diamètre sous l'action de moyens de serrage (22, 24), le dispositif comprenant, en outre, une bague d'étanchéité (12, 112) apte à être disposée dans le manchon (10) pou entourer les extrémités en regard des deux tubes, cette bague étant constituée par une bande enroulée sur elle-même et présentant deux extrémités (12A, 12B ; 112A, 112B) aptes à venir en contact d'engagement, par au moins un ensemble mâle/femelle comprenant une conformation mâle (28 ; 128A, 128B, 128C ; 232A, 232B) apte à être engagée dans une conformation femelle (30 ; 130A, 130B, 130C ; 230) lorsque, la bague étant située dans le manchon (10) ce dernier est serré autour des extrémités en regard des tubes, dans lequel au moins l'une des conformations mâle et femelle d'un ensemble mâle/femelle présente des bords de contact (30A, 30B ; 230A, 230B) formés sur des pattes de contact (32A, 32B ; 132A, 132B ; 232A, 232B),
**caractérisé en ce que** des renfoncements de pliage (34A, 34B ; 134A, 134B ; 234A, 234B) sont ménagés du côté des pattes de contact (32A, 32B ; 132A, 132B ; 232A, 232B) opposé aux bords de contact (30A, 30B) et **en ce que** les renfoncements de pliage présentent des entailles obliques (36A, 36B ; 136A, 136B ; 236A, 236B) situées au voisinage des pattes de contact (32A, 32B ; 132A, 132B ; 232A, 232B) pour permettre auxdites pattes, lors de l'engagement de la conformation mâle dans la conformation femelle sous l'effet du serrage, de se plier dans le sens favorisant la pénétration de la conformation mâle dans la conformation femelle.

2. Dispositif selon la revendication 1, **caractérisé en ce que** les pattes de contact (32A, 32B ; 132A, 132B ; 232A, 232B) sont reliées à l'extrémité de la bande qui les porte par des portions de base entaillées présentant lesdites entailles obliques (36A, 36B ; 136A, 136B ; 236A, 236B).

3. Dispositif selon la revendication 1 ou 2, **caractérisé en ce que** la conformation mâle de l'ensemble mâle/femelle comprend une languette (28 ; 128A), tandis que la conformation femelle dudit ensemble comprend une encoche (30 ; 130A) délimitée entre deux pattes de contact (32A, 32B ; 132A, 132B), pour la pénétration de ladite languette dans ladite encoche et **en ce que** au moins l'une des dimensions transversales constituées par la largeur (128) de la languette et la largeur (130) de l'encoche va en diminuant dans le sens de la pénétration de la languette dans l'encoche.

4. Dispositif selon la revendication 3, **caractérisé en ce que** les renfoncements de pliage (34A, 34B ; 134A, 134B) sont ménagés du côté des pattes de contact (32A, 32B ; 132A, 132B) opposé à l'encoche (30 ; 130A).

5. Dispositif selon la revendication 4, **caractérisé en ce que** les entailles obliques (36A, 36B ; 136A, 136B) sont orientées de manière à aller en se rapprochant l'une de l'autre dans le sens de la pénétration de la languette dans l'encoche.

6. Dispositif selon l'une quelconque des revendications 1 à 5, **caractérisé en ce que** la conformation femelle de l'ensemble mâle/femelle comprend une encoche (230 ; 30), tandis que la conformation mâle dudit ensemble comprend deux pattes latérales (232A, 232B) de contact aptes à pénétrer dans ladite encoche (230 ; 30) et **en ce que** au moins l'une des dimensions transversales constituées par la largeur (1230) de l'encoche et par l'écart (e230) entre les bords de contact (230A ; 230B) des pattes de contact va en diminuant dans le sens de la pénétration desdites pattes dans l'encoche.

7. Dispositif selon la revendication 6, **caractérisé en ce que** ladite conformation mâle comprend, en outre, au moins une patte centrale (231), disposée entre les pattes dé contact (232A, 232B) en étant espacée de ces dernières par des renfoncements de pliage (234A, 234B).

8. Dispositif selon la revendication 7, **caractérisé en ce que** les renfoncements de pliage (234A, 234B) qui espacent la patte centrale des pattes de contact présentent des entailles obliques (236A, 236B) situées au voisinage des pattes de contact (232A, 232B).

9. Dispositif selon la revendication 8, **caractérisé en ce que** les entailles obliques (236A, 236B) sont orientées de manière à aller en se rapprochant dans le sens de la pénétration de la conformation mâle dans la conformation femelle.

## Claims

1. A device for coupling together in leaktight manner two smooth tubes disposed end-to-end and having substantially the same diameter, the device comprising a sleeve (10) suitable for being disposed around the facing ends of the two tubes, said sleeve being provided with means (11) for enabling its diameter to be decreased under the action of tightening means (22, 24), the device further comprising a sealing ring (12, 112) suitable for being disposed inside the sleeve (10) for the purpose of surrounding the facing ends of the two tubes, said ring being constituted by a strip looped back on itself and having two ends (12A, 12B; 112A, 112B) suitable for coming into engagement contact, via at least one male/female set comprising a male shaped portion (28; 128A, 128B, 128C; 232A, 232B) suitable for being engaged in a female shaped portion (30; 130A, 130B, 130C; 230) when, with the ring being situated inside the sleeve (10), said sleeve is tightened around the facing ends of the tubes; wherein at least one of the male and female shaped portions of a male/female set has contact edges (30A, 30B; 230A, 230B) formed on contact tabs (32A, 32B; 132A, 132B; 232A, 232B),
**characterized in that** deflection setbacks (34A, 34B; 134A, 134B; 234A, 234B) are provided on those sides of the contact tabs (32A, 32B; 132A, 132B; 232A, 232B) that are opposite from the contact edges (30A, 30B) and **in that** the deflection setbacks (34A, 34B; 134A, 134B) are provided with slanting nicks (36A, 36B; 136A, 136B; 236A, 236B) situated in the vicinity of the contact tabs (32A, 32B; 132A, 132B; 232A, 232B) so as to enable said tabs to deflect in a direction facilating penetration of the male shaped portion into the female shaped portion while the male shaped portion is engaging into the female shaped portion under the effect of the tightening.

2. A device according to claim 1, **characterized in that** the contact tabs (32A, 32B; 132A, 132B; 232A, 232B) are connected to the end of the strip that carries them via nicked base portions (36A, 36B; 136A, 136B) which present said slanting nicks (36A, 36B; 136, 136B; 236A, 236B).

3. A device according to claim 1 or 2, **characterized in that** the male shaped portion of the male/female set comprises a tongue (28; 128A) while the female shaped portion of said set comprises a notch (30; 130A) defined between two contact tabs (32A, 32B; 132A, 132B), so that said tongue can penetrate into said notch, and **in that** at least one of the transverse dimensions constituted by the width (128) of the tongue and by the width (130) of the notch decreases going in the direction in which the tongue penetrates into the notch.

4. A device according to claim 3, **characterized in that** deflection setbacks (34A, 34B; 134A, 134B) are provided on the sides of the contact tabs (32A, 32B; 132A, 132B) that are opposite from the notch (30; 130A).

5. A device according to claim 4, **characterized in that** the slanting nicks (36A, 36B; 136A, 136B) are oriented so as to come closer to each other in the direction in which the tongue penetrates into the notch.

6. A device according to any one of claims 1 to 5, **characterized in that** the female shaped portion of the male/female set comprises a notch (230; 30) while the male portion of said set comprises two side contact tabs (232A, 232B) suitable for penetrating into said notch (230; 30), and **in that** at least one of the transverse dimensions constituted by the width (1230) of the notch and by the gap (e230) between the contact edges (230A; 230B) of the contact tabs decreases going in the direction in which said tabs penetrate into said notch.

7. A device according to claim 6, **characterized in that** said male shaped portion further comprises at least one central tab (231) disposed between the contact tabs (232A, 232B) while being spaced apart therefrom by deflection setbacks (234A, 234B).

8. A device according to claim 7, **characterized in that** the deflection setbacks (234A, 234B) that separate the central tab from the contact tabs are provided with slanting nicks (236A, 236B) situated in the vicinities of the contact tabs (232A, 232B).

9. A device according to claim 8, **characterized in that** the slanting nicks (236A, 236B) are oriented so as to come closer to each other in the direction in which the male shaped portion penetrates into the female shape portion.

## Patentansprüche

1. Vorrichtung zum dichten Kuppeln von zwei aneinander angeordneten glatten Rohren, die im wesentlichen den gleichen Durchmesser aufweisen, wobei die Vorrichtung eine Manschette (10) umfaßt, die geeignet ist, um die gegenüberliegenden Enden der beiden Rohre angeordnet zu werden, wobei diese Manschette mit Mitteln (11) versehen ist, um unter der Wirkung von Klemmitteln (22, 24) eine Verringerung ihres Durchmessers zu ermöglichen, wobei die Vorrichtung ferner einen Dichtungsring (12, 112) umfaßt, der geeignet ist, in der Manschette (10) angeordnet zu werden, um die gegenüberliegenden Enden der beiden Rohre zu umgreifen, wobei dieser Ring von einem um sich selbst gewickelten Band gebildet ist und zwei Enden (12A, 12B; 112A, 112B) aufweist, die geeignet sind, durch wenigstens eine Steckanordnung in Steckkontakt zu gelangen, welche eine Einsteckausbildung (28; 128A, 128B, 128C; 232A, 232B) umfaßt, die geeignet ist, in eine Aufnahmeausbildung (30; 130A, 130B, 130C; 230) eingesteckt zu werden, wenn - während der Ring sich in der Manschette (10) befindet - letztere um die gegenüberliegenden Enden der Rohre festgezogen wird, wobei wenigstens eine der Einsteck- und Aufnahmeausbildungen einer Steckanordnung Kontaktränder (30A, 30B; 230A, 230B) aufweist, die an Kontaktlaschen (32A, 32B; 132A, 132B; 232A, 232B) ausgebildet sind,
**dadurch gekennzeichnet, daß** Biegerücksprünge (34A, 34B; 134A, 134B; 234A, 234B) auf der den Kontakträndern (30A, 30B) gegenüberliegenden Seite der Kontaktlaschen (32A, 32B; 132A, 132B; 232A, 232B) ausgebildet sind und daß die Biegerücksprünge schräge Einschnitte (36A, 36B; 136A, 136B; 236A, 236B), welche in der Nähe der Kontaktlaschen (32A, 32B; 132A, 132B; 232A, 232B) gelegen sind, aufweisen, um den Laschen während des Einsteckens der Einsteckausbildung in die Aufnahmeausbildung unter der Wirkung des Festziehens zu ermöglichen, sich in die das Eindringen der Einsteckausbildung in die Aufnahmeausbildung begünstigende Richtung zu biegen.

2. Vorrichtung nach Anspruch 1, **dadurch gekennzeichnet, daß** die Kontaktlaschen (32A, 32B; 132A, 132B; 232A, 232B) mit dem sie tragenden Ende des Bandes, durch eingekerbte Basisabschnitte, welche die schrägen Einschnitte (36A, 36B; 136A, 136B; 236A, 236B) aufweisen, verbunden sind.

3. Vorrichtung nach Anspruch 1 oder 2, **dadurch gekennzeichnet, daß** die Einsteckausbildung der Steckanordnung eine Zunge (28; 128A) umfaßt, während die Aufnahmeausbildung der Anordnung eine zwischen zwei Kontaktlaschen (32A, 32B; 132A, 132B) begrenzte Nut (30; 130A) umfaßt, für das Eindringen der Zunge in die Nut, und daß wenigstens eine der Querabmessungen, die von der Breite (128) der Zunge und von der Breite (130) der Nut gebildet sind, in der Richtung des Eindringens der Zunge in die Nut abnehmend ist.

4. Vorrichtung nach Anspruch 3, **dadurch gekennzeichnet, daß** die Biegerücksprünge (34A, 34B; 134A, 134B) auf der der Nut (30; 130A) gegenüberliegenden Seite der Kontaktlaschen (32A, 32B; 132A, 132B) ausgebildet sind.

5. Vorrichtung nach Anspruch 4, **dadurch gekennzeichnet, daß** die schrägen Einschnitte (36A, 36B; 136A, 136B) derart ausgerichtet sind, daß sie sich in der Richtung des Eindringens der Zunge in die Nut einander nähern.

6. Vorrichtung nach einem der Ansprüche 1 bis 5, **dadurch gekennzeichnet, daß** die Aufnahmeausbildung der Steckanordnung eine Nut (230; 30) umfaßt, während die Einsteckausbildung der Anordnung zwei seitliche Kontaktlaschen (232A, 232B) umfaßt, die geeignet sind, in die Nut (230; 30) einzudringen, und daß wenigstens eine der Querabmessungen, die von der Breite (1230) der Nut und von dem Abstand (e230) zwischen den Kontakträndern (230A; 230B) der Kontaktlaschen gebildet sind, in der Richtung des Eindringens der Laschen in die Nut abnehmend ist.

7. Vorrichtung nach Anspruch 6, **dadurch gekennzeichnet, daß** die Einsteckausbildung ferner wenigstens eine mittlere Lasche (231) umfaßt, die zwischen den Kontaktlaschen (232A, 232B) angeordnet und dabei von letzteren durch Biegerücksprünge (234A, 234B) beabstandet ist.

8. Vorrichtung nach Anspruch 7, **dadurch gekennzeichnet, daß** die Biegerücksprünge (234A, 234B), welche die mittlere Lasche von den Kontaktlaschen beabstanden, schräge Einschnitte (236A, 236B) aufweisen, die in der Nähe der Kontaktlaschen (232A, 232B) gelegen sind.

9. Vorrichtung nach Anspruch 8, **dadurch gekennzeichnet, daß** die schrägen Einschnitte (236A, 236B) derart ausgerichtet sind, daß sie sich in der Richtung des Eindringens der Einsteckausbildung in die Aufnahmeausbildung einander nähern.
